(19) Europäisches Patentamt
European Patent Office
Office européen des brevets

(11) **EP 2 820 102 B1**

(12) **EUROPEAN PATENT SPECIFICATION**

(45) Date of publication and mention
of the grant of the patent:
**12.01.2022 Bulletin 2022/02**

(51) Int Cl.:
***C09K 3/16*** *(2006.01)*     ***C09D 5/24*** *(2006.01)*
***C09D 133/14*** *(2006.01)*     ***G02B 5/30*** *(2006.01)*

(21) Application number: **13708085.9**

(22) Date of filing: **20.02.2013**

(86) International application number:
**PCT/EP2013/000485**

(87) International publication number:
**WO 2013/127500 (06.09.2013 Gazette 2013/36)**

(54) **CONDUCTIVE POLYMER LAYER AS AN ANTISTATIC PROTECTION SHIELD FOR POLARIZATION FILTER**

LEITFÄHIGES POLYMER ALS ANTISTATISCHER SCHUTZSCHILD FÜR EINEN POLARISATIONSFILTER

POLYMER CONDUCTEUR EN TANT QUE ECRAN DE PROTECTION POUR UN FILTRE POLARISATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2012 DE 102012003738**
          **05.03.2012 US 201261606747 P**
          **07.06.2012 DE 102012011261**
          **23.07.2012 US 201261674468 P**

(43) Date of publication of application:
**07.01.2015 Bulletin 2015/02**

(73) Proprietor: **Heraeus Deutschland GmbH & Co. KG**
**63450 Hanau (DE)**

(72) Inventors:
• **GUNTERMANN, Udo**
**47800 Krefeld (DE)**
• **ELSCHNER, Andreas**
**45468 Mulheim an der Ruhr (DE)**
• **KIRCHMEYER, Stephan**
**51375 Leverkusen (DE)**

(74) Representative: **Herzog IP Patentanwalts GmbH**
**Steinstraße 16-18**
**40212 Düsseldorf (DE)**

(56) References cited:
WO-A1-2007/105903     WO-A2-2009/084832
JP-A- 2009 086 244     KR-A- 20070 093 936
KR-A- 20090 054 537     KR-A- 20090 073 062
US-A1- 2005 042 442

**Description**

The invention relates to a layered structure which can be employed in the field of polarization filters, in particular for shielding polarization filters from electromagnetic radiation. The shielding can serve on the one hand to increase the stability of polarization filters and on the other hand to improve the quality of the filters. The invention furthermore relates to a process for the production of a layered structure which can be employed as shielding for polarization filters, and a device having a layered construction according to the invention.

Polarization filters for various uses are known from the prior art. They are thus used in some screens for generation of the image. Polarizers are used above all in screens with liquid crystals, also called "liquid crystal displays" (LCD screens), or other display media, such as "organic light emitting devices" (OLEDs). In this context the polarizers may be exposed to various electrical fields. On the one hand such a display medium is exposed to environmental influences, such as, for example, sunlight, extreme temperatures and electrical fields from other electrical equipment in the surroundings. On the other hand, electromagnetic radiation also occurs within the medium due to electronic components within the housing of the apparatus. This can lead to unwanted charging of various elements, above all the polarizer, and cause interferences in the generation of a polarized light image. A deterioration in the image quality is caused by this means. Merely by operation of the LCD display, electromagnetic radiation from the inside outwards may also occur, against which external components must be protected.

In the prior art, readily conducting layers are often used for various purposes, inter alia for antistatic shielding of an apparatus. Thus, for example, in US 2011/0310333 an indium tin oxide coating (ITO) is used as an electrode for LCD screens. A process using indium tin oxide coatings which envisages a direct coating of the polarizers with the electrically conducting metal oxide layer is described. The metal oxide layer is applied by involved processes, such as spraying on or sputtering. This results in a defect rate which is often very high. Since the metal oxide layer is applied directly to the glass layer of the polarizers, a high waste of expensive base units which can no longer be further processed or must be freed from the metal oxide layer again by expensive and involved processes arises.

US 2007/0172587 describes an antistatic protection for a polarizer which is likewise envisaged for an LCD screen. For this, a layer of an electrically conducting polymer is provided, which has a resistance of from $10^3$ to $10^{12}$ Ω/square. A disadvantage of this coating, however, is its high resistance, so that it is not capable of conducting electromagnetic radiation of high current density.

An object of the present invention is therefore to alleviate or at least partly overcome at least one of the disadvantages emerging from the prior art. In particular, an improved resistance of the polarizers is to be achieved.

A further object is to achieve an improved light transmission of the polarizer. In particular, the capacity of the polarizer for being influenced by external influences, such as light or other electromagnetic radiation, is to be reduced.

It is moreover an object to achieve an improved shielding of electromagnetic radiation from the environment and from the apparatus.

It is furthermore an object to provide polarizers which achieve an increased brilliance when incorporated into a screen.

It is moreover an object of the invention to provide a process for the production of apparatuses having polarizers which represents an inexpensive alternative, for example, to the ITO coating of polarizers.

WO 2007/105903 A1, KR 2007 0093936 A and KR 2009 0073062 A disclose an antistatic coating composition for a polarizer film, comprising a conductive polymer and an organic acid compound, wherein the composition is used to apply an antistatic coating between a polarizer film and an adhesive layer.

WO 2009/084832 A2 discloses a polarizing film comprising a polarizer, a resin film as a base film and an antistatic coating layer, wherein the antistatic coating layer contains a conductive polymer, a curable resin, a hydroxyacrylate compound, a cellulose compound and a photopolymerization initiator.

A contribution towards achieving at least one of the above objects is made by the invention having the features of the independent claims. Advantageous further developments of the invention, which can be realized individually or in any desired combination, are described in the dependent claims.

In a first aspect, the invention relates to a layered structure as defined in claim 1.

It is preferable according to the invention for the at least one polarizer layer and the at least one conductor layer to at least partly overlap. It is preferable here for at least 20 %, preferably at least 50 % and particularly preferably at least 70 % of the area of the at least one polarizer layer and the at least one conductor layer to overlap. In the overlap, the two abovementioned layers can be present directly adjacent or also separated by one or more layers.

The layered structure can be envisaged for various uses in which at least one polarizer layer is to be employed. Preferably, with the layered structure according to the invention a beam of an electromagnetic wave, preferably in the visible wavelength range, which meets the polarizer layer of the layered structure is changed in its extension in at least one spatial direction.

The layered structure can assume various shapes and sizes adapted to its use. A layered structure is preferably understood as meaning a structure which comprises at least two layers of different chemical composition or physical properties. According to the invention, a different composition of a layer is understood as meaning that the materials from which the two different layers are constructed differ in at least one component. Thus, two layers of a layered structure differ by physical properties if, for example, these layers with the same chemical composition have a different thickness, surface structure, such as roughness, or density.

According to the invention, the layered structure has a geometric shape which has a significantly greater extension in a first spatial direction, also called length of the layered structure, and a second spatial direction, also called width of the layered structure, than in a third spatial direction, also called thickness. In a layered structure, the length and width can be in each case 5 to $10^9$ times greater than the thickness of the layered structure. A layered structure can preferably form a planar structure. Layered structures which have a significantly greater extension in the two spatial directions of length and width than the thickness can be called planar structures. According to the invention, a layered structure is thus preferably called a planar structure if the extension of the length and width of the layered structure is in each case 10 to $10^9$ times greater than the thickness of the layered structure. The layered structure can in each case have different geometries in its individual layers. For example, one of the layers, for example the polarizer layer, can be composed of varying geometric structures.

The layered structure comprises at least one polarizer layer, also called polarizer in the following. In general, a polarizer has the function of producing electromagnetic waves (often light in the visible wavelength range of from approx. 300 to 800 nm) having a defined, usually linear polarization. A wave of coupled electrical and magnetic fields is called an electromagnetic wave. In free space, the vectors of the electrical and of the magnetic field of the electromagnetic wave stand perpendicular to one another and in the direction of propagation. Polarization can be effected by selective absorption or by ray division. A distinction may be made in principle between two types of polarization of electromagnetic waves, also called light in the following. There are thus polarizers which polarize the light linearly, and others which polarize the light circularly. Among the linearly polarizing polarizers, a distinction is made between polarizers which operate on the basis of dichroism, of birefringence or of reflection, as described in detail in the following.

A dichroic polarizer for example, which is based on dichroism, absorbs the two components of linearly polarized light highly asymmetrically, that is to say one of the components (i) is absorbed to a higher degree than the other component (ii), and the other component (ii) is transmitted to a higher degree than the one component (i). In polarizers made of dichroic crystals, for example, the absorption depends on the polarization direction relative to the optical axis. By simply rotating these crystals, only the desired polarization direction is let through. Crystals which are used for this are, for example, tourmalines. An alternative form of such a polarizer is the grid polarizer having a grid of parallel, conductive wires. In this, the polarization component is absorbed or reflected parallel to the conductive wires. In contrast, the other component is changed only little by the grid and can penetrate through the grid virtually undisturbed. Another alternative is offered by a colourless polyvinyl alcohol film (PVA) with embedded iodine crystallites. An aligned polarization is achieved by first heating the PVA film and stretching it in a certain direction, which is also called "drawing". By this means, the long-chain hydrocarbon molecules are at least partly aligned. On subsequent introduction of the iodine crystallites, these add on to the PVA molecules and in their turn form long conductive chains which act like the metallic grid in a wire grid polarizer. Instead of PVA films, films of cellulose hydrate can also be used.

Polarizers with an action based on the birefringent properties of the materials used are generally called polarization prisms. In birefringent materials, the refractive index depends on the polarization of the light, whereby light of different (linear) polarization undergoes different refraction. The contents of the light polarized perpendicularly to one another consequently take different paths through the material and can be separated in this manner. Examples of birefringent polarizers conventionally used are the Nicol prism, the Rochon prism and the Glan-Thompson prism. There is moreover a large number of further polarizing prisms which differ primarily in the arrangement of the birefringent crystals. The arrangement also results in whether only a particular polarization or whether both rays in different exit angles reach the field of view.

Non-polarized light can also be polarized by reflection. For example, if non-polarized light falls on to a glass plate under the Brewster angle, the reflected part is polarized linearly, and indeed perpendicularly to the incident plane of the light. The Brewster angle is a material-dependent constant of the glass used. The transmitted content is only partly polarized. However, if this light is allowed to pass through several plates under the Brewster angle, this content can also be polarized linearly. The plane of polarization here is parallel to the incident plane.

For generation of circular polarization, it is preferable to establish a phase difference of at least 90° between the perpendicularly polarized and parallel-polarized content. For this purpose, as a rule delay plates are employed, in which one polarization component is propagated in the optically anisotropic material more slowly than the other. The phase difference can moreover also be achieved by a precisely defined reflection in an optically transparent material, for example in a Fresnel parallelepiped.

The layered structure preferably comprises at least one polarizer layer or also two and more which can generate linearly polarized light. The polarizer layer can be constructed from several layers of different materials having a polarizing action. The polarizer layer can thus comprise, for example, one or more layers of a linearly or circularly polarizing material. The polarizer layer can furthermore have one or more layers of a further linearly or circularly polarizing material or at least one layer each of two differently polarizing materials. These materials can be, for example, those which have been described above for the different forms of polarizations, such as, for example, PVA, tourmalines or grid polarizers.

The polarizer layer preferably comprises polyvinyl alcohol (PVA) or other polymers which are capable of complexing or which comprises or comprise iodine. Alternatively or in addition, the polarizer layer can contain crystal structures which likewise exert a polarizing action on electromagnetic waves when non-polarized light is passed through them. These can be, for example, crystals of, for example, a tourmaline.

The polarizer layer preferably has a thickness in a range of from 1 to 10,000 $\mu$m, particularly preferably in a range of from 10 to 5,000 $\mu$m and very particularly preferably in a range of from 20 to 1,000 $\mu$m.

The layered structure according to the invention furthermore comprises at least one conductor layer which comprises an electrically conducting polymer. The at least one conductor layer has a surface resistance in a range of from $10^{-4}$ to 500 $\Omega$/square, preferably in a range of from 5 x $10^{-4}$ to 500 $\Omega$/square, particularly preferably in a range of from $10^{-3}$ to 500 $\Omega$/square or from $10^{-3}$ to 400 $\Omega$/square, preferably in a range of from 5 x $10^{-2}$ to 300 $\Omega$/square, particularly preferably in a range of from 10 to 250 $\Omega$/square. Preferably, the conductor layer comprises the electrically conducting polymer in a range of from 50 to 100 wt.%, particularly preferably in a range of from 60 to 100 wt.%, very particularly preferably in a range of from 70 to 100 wt.%. The conductor layer can moreover contain further materials. The further materials can be chosen from the group consisting of a further polymer, a metal, a ceramic and a glass, a surface-active substance and at least two of these. According to the invention the conducting polymers in the conductor layer are formed from a dispersion of conductive polymer, preferably having a content of conductive polymer in a range of 0.1 to 10 wt.% and particularly preferably in a range of from 0.5 to 5 wt.%, in each case based on the dispersion.

In addition to the conductive polymer, this dispersion can moreover comprise as additional components surface-active substances, such as ionic and nonionic surfactants, or adhesion promoters, such as organofunctional silanes or hydrolysates thereof, such as 3-glycidoxypropyltrialkoxysilane, 3-aminopropyltriethoxysilane, 3-mercaptopropyltrimethoxysilane, 3-methacryloxypropyltrimethoxysilane, vinyltrimethoxysilane or octyltriethoxysilane.

According to the invention these dispersions comprise further additives, as additional components, which increase the conductivity, the additives being selected from the group of compounds containing ether groups, compounds containing lactone groups, compounds containing amide or lactam groups, sulphones, sulphoxides, sugar or sugar derivatives, furan derivatives and di- or polyalcohols.

Compounds containing ether groups are e.g. tetrahydrofuran, compounds containing lactone groups are $\gamma$-butyrolactone, $\gamma$-valerolactone, compounds containing amide or lactam groups are caprolactam, N-methylcaprolactam, N,N- dimethylacetamide, N-methylacetamide, N,N-dimethylformamide (DMF), N- methylformamide, N-methylformanilide. Further compounds may be N-methylpyrrolidone (NMP), N-octylpyrrolidone, pyrrolidone, sulphones and sulphoxides, such as e.g. sulpholane (tetramethylene sulphone), dimethylsulphoxide (DMSO), sugars or sugar derivatives, such as e.g. sucrose, glucose, fructose, lactose, sugar alcohols, such as e.g. sorbitol, mannitol, furan derivatives, such as e.g. 2-furancarboxylic acid, 3-furancarboxylic acid and/or di- or polyalcohols, such as e.g. ethylene glycol, glycerol, di- and triethylene glycol Tetrahydrofuran, N-methylformamide, N-methylpyrrolidone, ethylene glycol, dimethylsulphoxide or sorbitol are particularly preferably employed as conductivity-increasing additives.

These dispersions can moreover comprise as additional components one or more organic binders which are soluble in organic solvents or water-soluble, such as polyvinyl acetate, polycarbonate, polyvinyl butyral, polyacrylic acid esters, polyacrylamides, polymethacrylic acid esters, polymethacrylamides, polystyrene, polyacrylonitrile, polyvinyl chloride, polyvinylpyrrolidone, polybutadiene, polyisoprene, polyethers, polyesters, polyurethanes, polyamides, polyimides, polysulphones, silicones, epoxy resins, styrene/acrylic acid ester, vinyl acetate/acrylic acid ester and ethylene/vinyl acetate copolymers, polyvinyl alcohols or celluloses.

The content of the polymeric binder in the dispersion is 0.1 - 90 wt.%, preferably 0.5 - 30 wt.% and very particularly preferably 0.5 - 10 wt.%, in each case based on the total weight of the dispersion. Such an organic binder optionally contained in the dispersion can also optionally function as the dispersing agent if this is liquid at the given temperature.

The dispersions according to the invention can have a pH of from 1 to 14, and a pH of from 1 to 8 is preferred. To adjust the pH, for example, bases or acids can be added to the dispersions. Those additions functioning as additional components which do not impair the film formation of the dispersions and are not volatile at higher temperatures, e.g. soldering temperatures, such as e.g. the bases 2-(dimethylamino)-ethanol, 2,2'-iminodiethanol or 2,2',2"-nitrilotriethanol and the acid polystyrenesulphonic acid, are preferred.

Depending on the production conditions, one, two or more of the abovementioned additional components remains in the conductor layer. This is the case in particular if the production conditions during production of the conductor layer are chosen such that the particular additional components do not evaporate or are not washed out or removed in another manner.

The specific surface resistance is a measure of the ability to withstand the surface current which flows along the surface of the object to be tested. This characteristic parameter depends greatly on the ambient conditions and the test specimen. The atmospheric humidity, contamination of the surface, the test specimen size and the electrode shape and arrangement thus play a decisive role here. The measurement method standardized internationally under DIN EN 61340-2-3 was therefore used for determination of the surface resistance. In this, two electrodes are arranged on the surface of the object to be tested in a square arrangement relative to one another, the distance between the electrodes corresponding to the electrode length. The surface resistance stated is consequently based on a square.

The characteristic parameter of plastics described as electrostatic properties depends on the specific surface resistance of the material and is classified according to DIN EN 61340-5-1.

Test substances having a surface resistance in the range of greater than $10^{12}$ $\Omega$/square are called insulating. Many thermoplastic materials, for example, fall into this group.

With a surface resistance of $10^{-4}$ to 500 $\Omega$/square, the electrically conducting polymer contained in the conductor layer is an electrical conductor. With this property, the electrically conducting polymer is capable of conducting even the smallest electrical voltages.

It is furthermore preferable for the conductor layer to be able to dampen electromagnetic waves in a range of from 0.1 to 10 dB(V), preferably in a range of from 1 to 5 dB(V), this being determined in accordance with IEEE-STD 299. The layered structure can have an area in a range of from 1 cm$^2$ to 1,000 m$^2$, preferably in a range of from 10 cm$^2$ to 100 m$^2$, particularly preferably in a range of from 10 cm$^2$ to 10 m$^2$.

In a preferred embodiment, the layered structure furthermore comprises an additional layer. The additional layer can function as a carrier layer, preferably in the production of a layer precursor, or as a covering, in particular for protection from environmental influences, such as mechanical damage. The additional layer can serve to protect the layered structure, in particular the conductor layer, from in particular mechanical or thermal influences of the surroundings. The additional layer should furthermore have a high transmission in the visible wavelength range of light. Preferably, the additional layer has a transmission in a range of from 60 to 99 %, particularly preferably in a range of from 70 to 99 %, very particularly preferably in a range of from 80 to 99 %, the transmission of the coated substrate being determined in accordance with ASTM D 1003. In this context, the transmission is determined over the entire visible spectral range, as described in ASTM E308. For this, the standard spectral value Y is calculated from the transmission spectrum measured, taking into account light type D65 and a 10° observer angle. It is furthermore preferable for the additional layer to have a high flexibility.

The additional layer can comprise any material which protects the conductor layer from external influences and in this context has in particular the properties described above. Preferably, the additional layer can comprise a polymer which preferably makes up the additional layer to the extent of at least 50 wt.%. The polymer furthermore preferably can be a thermoplastic polymer. The additional layer can have a thickness in a range of from 0.01 to 1,000 $\mu$m, preferably in a range of from 0.5 to 500 $\mu$m, particularly preferably in a range of from 20 to 200 $\mu$m.

The additional layer can be arranged both on the upper side of the polarizer layer and on the under-side. Preferably, an additional layer is arranged both on the upper side and on the under-side of the polarizer layer. At least one conductor layer can in turn be located on one of the sides, either the upper or the under-side, or on both sides of the polarizer layer. Preferably, the at least one conductor layer is arranged on the under-side of the polarizer layer. Furthermore preferably, an additional layer is arranged between the polarizer layer and the conductor layer. Particularly preferably, a further additional layer is additionally arranged on the upper side of the polarizer layer.

In a preferred embodiment of the layered structure, the at least one additional layer comprises an ester, preferably a multiple ester of cellulose, preferably triacetylcellulose. Preferably, the additional layer has a content of cellulose ester, preferably of triacetylcellulose, in a range of from 50 to 100 wt.%, preferably in a range of from 60 to 100 wt.%, particularly preferably in a range of from 70 to 100 wt.%, in each case based on the total weight of the additional layer. The additional layer can furthermore comprise a polymer which likewise is as transparent as possible. The polymer should have a transmission for visible light in a range of from 60 to 99 %, particularly preferably in a range of from 70 to 99 %, very particularly preferably in a range of from 80 to 99 % for all wavelengths in the visible spectral range. The polymer can be chosen from the group consisting of polyamide (PA), polypropylene (PP), polyacetate (PLA), polycarbonate (PC), cyclic olefin polymer (COP), cyclic olefin copolymer (COC), polyethylene (PE), polyvinyl chloride (PVC), polystyrene (PS), polyether ether ketone (PEEK) and polymethyl methacrylate (PMMA) and at least two of these.

In a preferred embodiment of the layered structure, the layered structure comprises at least one further polarizer layer. This polarizer layer can be directly adjacent to the first polarizer layer, but it can also be separated from this by at least one further layer. Preferably, the first polarizer layer is spaced from the second polarizer layer at least by an additional layer. Here also, it is preferable for the further polarizer layer and the at least one polarization layer, as described above generally for the layers of the layered structure, at least partly to overlap.

The conductor layer can comprise the electrically conductive polymer in an amount in a range of from 60 to 100 wt.%, preferably in a range of from 70 to 100 wt.%, particularly preferably in a range of from 80 to 100 wt.%, in each case based on the total weight of the conductor layer.

The conductive polymer preferably has an electrical conductivity in a range of from 10 to 300 S/cm, preferably in a range of from 50 to 280 S/cm, particularly preferably in a range of from 100 to 250 S/cm.

The conductor layer can comprise a further polymer as a further constituent. The polymer can be chosen from the group consisting of polyamide (PA), polypropylene (PP), polyacetate (PLA), polycarbonate (PC), cyclic olefin polymer (COP), cyclic olefin copolymer (COC), polyethylene (PE), polyvinyl chloride (PVC), polystyrene (PS), polyether ether ketone (PEEK) and polymethyl methacrylate (PMMA) and at least two of these. The conductor layer can comprises a further polymer in an amount in a range of from 0.5 to 40 wt.%, preferably in a range of from 0.5 to 30 wt.%, particularly preferably in a range of from 0.5 to 20 wt.%, in each case based on the total weight of the conductor layer. The conductive polymer of the layered structure comprises a polyanion. The polyanion serves as a counter-ion to the polycation of the electrically conductive polymer. The polyanion can have a molecular weight in a range of from 7,000 to 200,000 g/mol, preferably in a range of from 10,000 to 150,000 g/mol, particularly preferably in a range of from 50,000 to 100,000 g/mol. Preferably, the pH of the polyanion is in a range of from 1 to 8, preferably in a range of from 0.8 to 4 and particularly preferably in a range of from 1 to 2, determined in accordance with DIN 38404 (C5). The conductor layer can comprise a polyanion in a range of from 30 to 90 wt.%, preferably in a range of from 40 to 85 wt.%, particularly preferably in a range of from 60 to 80 wt.%, in each case based on the total weight of the conductor layer.

According to the invention the polyanion of the layered structure is polystyrenesulphonic acid (PSS).

According to the present invention the conductive polymer is PEDOT/PSS.

In a preferred embodiment, the layered structure has an electrically insulating layer, in particular a glass layer, a liquid crystal layer, in particular an "in plane switching" panel (IPS panel) or a combination of at least two of these. The insulating layer can serve to further modify the properties of the light which passes through the polarizer layer. Preferably, the electrically insulating layer is a liquid crystal layer or an IPS panel. For example, if a liquid crystal layer is employed as an electrically insulating layer in the layered structure, such as is employed in LCD screens, in particular in IPS panels, it can allow the light to pass through the layered structure, depending on its polarization, or can absorb the light. The liquid crystal layer has the property, depending on the voltage applied to it, of polarizing the light entering or of allowing it to pass through unchanged. LCD screens consist of segments of liquid crystals which can change their transmission independently of each other. For this, the alignment of the liquid crystals in each segment is controlled by an electrical voltage. The transmission for polarized light which is generated with a background illumination and at least one polarization layer thus changes. For this, the layered structure has a second polarizer layer on the other side of the liquid crystal layer. The peculiarity of the IPS panel is that here the electrodes for applying the voltage lie in the plane of the screen.

The layered structure can have at least one further layer. An example of a further layer is an adhesive layer or a pressure-sensitive layer. The adhesive layer can be introduced, for example, between the polarizer layer and the conductor layer. Furthermore, an adhesive layer can be employed alternatively or additionally between the conductor layer and the additional layer. The adhesive layer can comprise an adhesive which cures, for example, by physical or chemical means. Adhesives which cure by physical means as a rule already comprise a polymer, which is dissolved in a solvent. The solvent evaporates during curing, so that a solid layer remains. Adhesives which cure by chemical means cure on the basis of a reaction of chemical components in the adhesive. Monomer constituents, such as cyanoacrylates, methyl methacrylates, silicones, imides, sulphide, urethanes and epoxides, polymerize here, for example, after initiation by light, heat or a free radical initiator, to give their polymers.

A further adhesive layer can serve to glue the polarizer layer together with the conductor layer on to the insulating layer, in particular a liquid crystal layer. Preferably, a polarizer layer is likewise arranged on the liquid crystal layer, on the other side. The layered structure then has two polarizer layers separated by a liquid crystal layer. The conductor layer is additionally arranged at least on one polarizer layer.

If a pressure-sensitive layer is employed, this may be capable of generating local information by exertion of a pressure on the layer, such as takes place, for example, on touch-sensitive screens, also called "touch screen".

In a further preferred embodiment of the layered structure, at least one of the layers has a thickness in a range of from 0.01 to 10 $\mu$m, preferably a range of from 0.05 to 5 $\mu$m, particularly preferably in a range of from 0.1 to 3 $\mu$m. Preferably, the at least one conductor layer or the at least one additional layer or the at least one adhesive layer has the stated thickness.

In a preferred embodiment, the layered structure is transparent, in particular it has a transmission of light in a wavelength range of from 300 to 800 nm in a range of from 50 to 99 %, preferably in a range of from 60 to 98 %, particularly preferably in a range of from 70 to 95 %. If the layered structure has an electrically insulating layer in the form of a liquid crystal layer, the transmission depends on the liquid crystal circuit. The ranges stated here apply in particular to the layered structure without an insulating layer or to a layered structure with an insulating layer, the insulating layer in the case of a liquid crystal being connected such that it has a maximum light transmission.

In a further aspect of the invention, a process for the production of a layered structure is proposed as defined in claim 7.

The polarizer layer can comprise, for example, materials such as have been mentioned above for the layered structure according to the invention. The polarizer layer preferably comprises polyvinyl alcohol (PVA) which comprises iodine. Preferably, the polarizer layer comprises polyvinyl alcohol in an amount in a range of from 50 to 100 wt.%, particularly preferably in a range of from 60 to 100 wt.%, very particularly preferably in a range of from 70 to 100 wt.%, in each case based on the total amount of the polarizer layer. In addition to PVA, the polarizer layer can comprise further materials. Preferably, the further materials comprise a polymer. The polymer can be chosen from the group consisting of polyamide (PA), polypropylene (PP), polyacetate (PLA), polycarbonate (PC), cyclic olefin polymer (COP), cyclic olefin copolymer (COC), polyethylene (PE), polyvinyl chloride (PVC), polystyrene (PS), polyether ether ketone (PEEK) and polymethyl methacrylate (PMMA) and at least two of these. The conductor layer can comprise the electrically conductive polymer in an amount in a range of from 60 to 100 wt.%, preferably in a range of from 70 to 100 wt.%, particularly preferably in a range of from 80 to 100 wt.%, in each case based on the total weight of the conductor layer.

In the superimposing of the conductor layer over the polarizer layer, a provision of the layers and subsequent superimposing such as are suitable for such purposes can take place. Suitable provisions of the polarizer layer can be, for example, the provision of the PVA layer in the form of a film. The film can be provided, for example, on a roll, or as an individual layer. The film on the roll can have an area in a range of from 10 $m^2$ to 10,000 $m^2$, preferably in a range of from 100 $m^2$ to 5,000 $m^2$, particularly preferably in a range of from 500 $m^2$ to 1,000 $m^2$. The film can have a thickness in a range of from 0.1 to 500 $\mu$m, preferably in a range of from 0.5 to 300 $\mu$m, particularly preferably in a range of from 1 to 200 $\mu$m. Further possibilities for provision of the polarizer layer can also be smaller pieces of the film, for example in a size in a range of from 1 cm to 100 $m^2$, preferably in a range of from 10 $cm^2$ to 50 $m^2$, particularly preferably in a range of from 1 $m^2$ to 20 $m^2$.

The superimposing over the polarizer layer can be chosen from the group consisting of spraying, spreading, knife coating, gluing, printing and fastening as well as a combination of at least two of these. The superimposing of the conductor layer over the polarizer layer by means of spraying can be chosen, for example, from the group consisting of a printing, a sputtering and a vapour deposition of a liquid phase as well as a combination of at least two of these measures. The superimposing of the conductor layer over the polarizer layer by means of spreading can be carried out, for example, by means of a paint brush, a sponge and a doctor blade as well as a combination of at least two of these. The superimposing of the conductor layer over the polarizer layer by means of gluing can be carried out, for example, via a chemically or physically setting adhesive or a combination of these. Examples of such adhesives have already been described for the adhesive layer for the layered structure. The superimposing over the polarizer layer by means of printing can be carried out, for example, by knife coating, contact printing, screen printing or by means of relief printing or gravure printing. The superimposing of the conductor layer over the polarizer layer by means of fastening can be chosen, for example, from the group consisting of tacking, clamping and stitching as well as a combination of at least two of these.

Preferably, the superimposing of the conductor layer over the polarizer layer is effected by known processes for application of films to surfaces. These include, in particular, slot casting, knife coating, spraying or curtain casting or a combination of at least two of these.

In a preferred embodiment of process, over the polarizer layer is superimposed at least one additional layer. The additional layer can have the properties and configurations as already described above for the layered structure. The additional layer can be arranged both on the upper side of the polarizer layer and on the under-side. Preferably, an additional layer is superimposed over the polarizer layer both on the upper side and on the under-side. The additional layer above the polarizer layer can be of a configuration which is different to or the same as the additional layer underneath the polarizer layer. The superimposing of the additional layer over the polarizer layer can be carried out in the same manner as described above for the superimposing of the conductor layer over the polarizer layer.

The conductor layer can in turn be superimposed over the polarizer layer on one of the sides, either the upper or the under-side, or on both sides of the polarizer layer. Preferably, the conductor layer is arranged on the under-side of the polarizer layer. Furthermore preferably, an additional layer is arranged between the polarizer layer and the conductor layer. Particularly preferably, a further additional layer additionally is superimposed over the upper side of the polarizer layer.

Preferably, the at least one additional layer comprises triacetylcellulose. The embodiments of the additional layer described for the layered structure likewise apply to the additional layer used in the process.

A process in which the layered structure comprises at least one further polarizer layer is preferred. This further polarizer layer can be configured and arranged as already described above for the further polarizer layer within the layered structure.

The polyanion serves as a counter-ion to the polycation of the electrically conductive polymer. The polyanion can have a molecular weight in a range of from 7,000 to 200,000 g/mol, preferably in a range of from 10,000 to 150,000 g/mol, particularly preferably in a range of from 50,000 to 100,000 g/mol. Preferably, the pH of the polyanion is in a range of from 1 to 8, preferably in a range of from 0.8 to 4 and particularly preferably in a range of from 1 to 2, determined in accordance with DIN 38404 (C5).

In a further preferred embodiment of the process, the layered structure has an electrically insulating layer, in particular a glass layer, a liquid crystal layer, in particular an IPS panel, or at least two of these. The electrically insulating layer can be configured as described for the layered structure.

Preferably, the electrically insulating layer is bonded to one of the abovementioned outer layers of the layered structure. The outer layer of the layered structure is preferably an adhesive layer. Alternatively, the insulating layer can also be bonded to another additional layer, as described above. The additional layer can be, for example, a TAC layer. Bonding of the insulating layer to a layer of the layered structure can preferably take place via gluing. The gluing can be effected either directly by the adhesive layer on the layered structure, or by application of an adhesive to the layered structure or the insulating layer and subsequent joining together of the layered structure with the insulating layer. The adhesive layer or the adhesive can be configured as already described above for the adhesive layer for the layered structure.

A process in which at least one of the layers has a thickness in a range of from 0.01 to 10 $\mu$m is furthermore preferred. This applies preferably to the conductor layer and/or the additional layer, as already described for the layered structure. All further aspects of the thickness of the layers as described for the layered structure also apply to the process.

In a preferred embodiment of the process, the layered structure is transparent. In particular, it has a transmission of light in a wavelength range of from 300 to 800 nm in a range of from 50 to 99 %, preferably in a range of from 60 to 98 %, particularly preferably in a range of from 70 to 95 %. If the layered structure has an electrically insulating layer in the form of a liquid crystal layer, the transmission depends on the liquid crystal circuit. The abovementioned ranges apply in particular to the layered structure without an insulating layer or to a layered structure with an insulating layer, the insulating layer in the case of a liquid crystal being connected such that it has a maximum light transmission.

In a further aspect of the invention, a layered structure obtainable by the process described above is proposed.

In a further aspect of the invention, a display, preferably having liquid crystals, comprising the layered structure described above is proposed. Liquid crystals which can be employed are all the liquid crystal structures known in the prior art which can be used in a display. The display can comprise, for example, an IPS panel as the liquid crystal. In addition to the layered structure according to the invention, the display can additionally comprise connections for a power supply, in particular for the circuit of the insulating layer. The display can furthermore also have a frame which surrounds the layered structure, in particular in order to protect it from external influences, especially during handling of the display. The display can have a screen area in a range of from 1 cm$^2$ to 1,000 m$^2$, preferably in a range of from 10 cm$^2$ to 100 m$^2$, particularly preferably in a range of from 10 cm$^2$ to 10 m$^2$.

The statements regarding the layered structure according to the invention moreover equally apply accordingly to the display according to the invention and to the process according to the invention for the production of the layered structure according to the invention. This applies in particular to materials and spatial configurations.

Further details and features of the invention emerge from the following description of preferred embodiment examples, in particular in combination with the sub-claims. The particular features can be realized here by themselves or severally in combination with one another. The invention is not limited to the embodiment examples. The embodiment examples are shown in diagram form in the figures. In this context, the same reference symbols in the individual figures designate elements which are the same or the same in function or correspond to one another with respect to their functions.

Figures

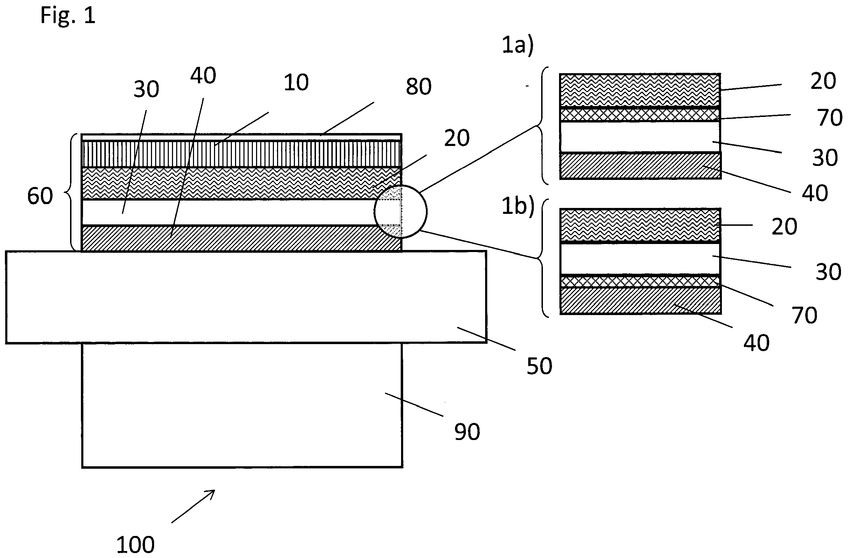

Figure 1:      Diagram of a layered structure having a liquid crystal layer;

Figure la:     Section of the layered structure from Figure 1 having a first arrangement of the conductor layer;

Figure lb:     Section of the layered structure from Figure 1 having a second arrangement of the conductor layer;

Figure 2:      Diagram of the production of a layered structure from Figure 1 having an arrangement according to the section of Figure 1a);

Figure 3:      Diagram of the production of a layered structure from Figure 1 having an arrangement according to the section of Figure 1b).

Figure 1 shows a layered structure 100 according to the invention. The layered structure 100 comprises a first polarizer layer 20 over which is superimposed on at least one side a first additional layer 10 and is provided with a covering 80 on the other side. This additional layer 10 preferably consists of triacetylcellulose. The layered structure 100 furthermore comprises a second additional layer 30 and a conductor layer 70, which, as shown in Figures 1a) and 1b), is either between the polarizer layer 20 and the second additional layer 30 or between the second additional layer 30 and an adhesive layer 40. By means of the adhesive layer 40, the polarizer element 60 constructed in this way can be glued directly on to a liquid crystal element 50, for example configured as an IPS panel, in the sense of an insulating layer 50. On the other side of the liquid crystal element 50 is also arranged a further polarizer element 90 having the same construction as the polarizer element 60, which is likewise constructed as a layered structure having at least one additional layer and at least one polarizer layer. Here also, the polarization element 90 is bonded to the liquid crystal element 50 via the adhesive layer 40. The layers of the additional layers 10, 30 and 80 can be produced from triacetylcellulose, as in this example. The polarizer layer 20 in this example consists fo a polyvinyl alcohol layer containing iodine.

The conductor layer 70 comprises a 0.2 μm thick, 80 wt.% PEDOT/PSS layer (comprising i. Clevios™ PH 500, ii. Clevios™ PH 750, iii. Clevios™ PH 1000, iv. Clevios™ FE, v. Clevios™ F ET and vi. Clevios™ F 010, all commercially obtainable from Heraeus Precious Metals GmbH & Co. KG).

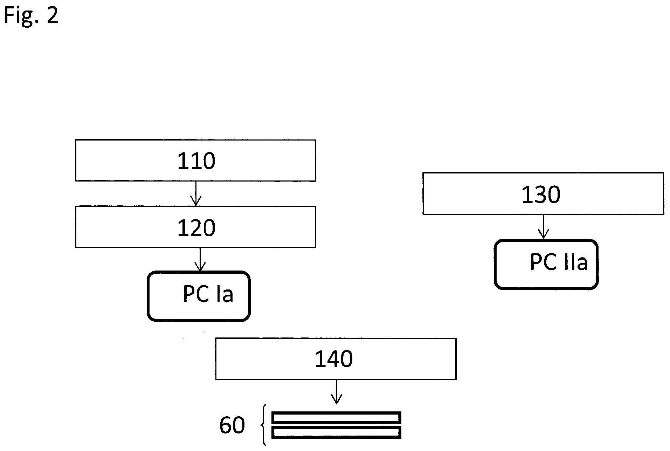

In Figure 2, a construction according to Figure 1a) is obtained, a conductor layer 70 first being bonded in step 110 to a first carrier layer 10, usually of TAC. A third carrier layer 80 is applied to the carrier layer 10 in a step 120, in order to obtain a precursor PC Ia. In a step 130 which overlaps with respect to time or is also subsequent, a precursor PC IIa is obtained by bonding a second additional layer to an adhesive layer 40. In step 140, the two precursors PC Ia and PC IIa are then bonded via a polarization layer 20, in order to obtain a polarizer element 60 having the layer sequence shown in Figure 1a).

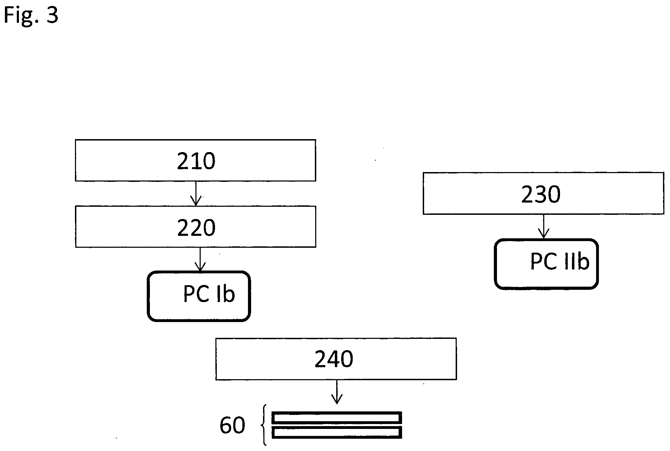

In Figure 3, a construction according to Figure 1b) is obtained, a conductor layer 70 first being bonded in step 210 to a carrier layer 30, usually of TAC. An adhesive layer 40 is applied to the carrier layer 30 in a step 220, in order to obtain a precursor PC Ib. In a step 230 which overlaps with respect to time or is also subsequent, a precursor PC IIb is obtained by bonding a first and third additional layer 10 and 80 respectively. In step 240, the two precursors PC Ib and PC IIb are then bonded via a polarization layer 20, in order to obtain a polarizer element 60 having the layer sequence shown in Figure 1b).

Examples

Test prints are produced with the commercial Clevios™ formulations shown in Tables 1 and 2 (manufacturer Heraeus Precious Metals GmbH & Co. KG) using a hand coater (spiral film applicator K-HAND-COATER 620 from Erichsen GmbH & Co. KG) in the wet film thicknesses stated in the tables on 80 μm cellulose triacetate film and are then dried at 70 °C for 5 minutes in order to obtain a coated film. The surface resistance is then measured with a 4-point measuring instrument (Multimeter: TTi 1906 from Thurlby Thandar Instruments Limited; measuring head: type ESP # 71404A), as well as the transmission of the coated films and of the non-coated film. The results are shown in the following table.

Table 1: Surface resistances of various films

| Example | Clevios™ | Wet film thickness [μm] | Surface resistance [Ω/square] | Transmission [%] |
|---|---|---|---|---|
| 1 | FET | 12 | 220 | 87.5 |
| 2 | FET | 6 | 400 | 88.9 |
| 3 | F 010 | 6 | 3,900 | 89 |
| 4 | - | - | > $10^{-12}$ | 90 |

The shielding effect of various coatings or films at various frequencies was furthermore investigated. Shielding effect is to be understood as meaning the ability of a coating or film to shield or conduct radiation of a certain frequency This is also called shielding efficiency. For the measurements of the shielding efficiency of various coatings and films listed in Table 2 in the frequency range of from 10 MHz to 4 GHz, the procedure was in accordance with the specification "ASTM D 4935-89". Two coaxial TEM measuring vessels as emitting and receiving antennae (coaxial TEM measurement probes, 1 MHz to 4 GHz, from Wandel & Goltermann) were connected to a network analyser (vector network analyser type 8753D, 30 kHz to 6 GHz, from Hewlett & Packard). During the calibration, the measurement arrangement was adjusted to "0 dB" for the transmission measurement using a non-coated PET substrate Melinex 505 having a thickness of 175 μm between the measuring heads.

Coated PET substrates were then investigated. For this, the aqueous Clevios formulations were applied to the PET substrate at room temperature using manual doctor blades from Erichsen which had a gap separation of 6 μm, 12 μm or 24 μm. The gap separation of the manual doctor blade in this context determines the thickness of the wet film formed, which is also called the wet film thickness. The coatings or films formed in this way were then dried in a drying oven at 130 °C for 5 min.

The measurement curves obtained for the shielding efficiency of the coated PET films are almost linear over the frequency in the range of 10 MHz - 4 GHz, i.e. the shielding efficiency is virtually independent of the frequency in this frequency range. On the other hand, a clear dependency of the shielding efficiency on the surface resistance is demonstrated. The shielding efficiency of the coatings or films investigated at various frequencies relevant, for example, to mobile communications is listed by way of example in the following Table 2.

Table 2: Shielding efficiency of various coatings at various frequencies

| Measurement objects/ frequencies | Surface resistance [ohm/sq] | 450 MHz, (TETRA) | 900 MHz, D network | 1800 MHz, E network | 2450 MHz, W-LAN |
|---|---|---|---|---|---|
| 1 Clevios FET 6 μm | 345 | 3.22 dB | 3.33 dB | 3.44 dB | 3.51 dB |
| 2 Clevios FET 12 μm | 165 | 6.14 dB | 6.32 dB | 6.49 dB | 6.64 dB |
| 3 Clevios FET 24 μm | 73 | 10.03 dB | 10.31 dB | 10.56 dB | 10.80 dB |
| 4 Clevios F 010 6 μm | 4,350 | 0.31 dB | 0.33 dB | 0.33 dB | 0.34 dB |
| 5 Clevios F 010 12 μm | 1,830 | 0.79 dB | 0.82 dB | 0.85 dB | 0.88 dB |
| 6 Clevios F 010 24 μm | 787 | 1.59 dB | 1.65 dB | 1.70 dB | 1.75 dB |

The shielding efficiency of a Clevios FET layer having a wet film thickness, resulting from the gap separation of the manual doctor blade, of 24 μm is 10.80 dB at 2.45 GHz. This corresponds to a transmission of the radiant power of 8.3 %. The relationship between the shielding efficiency SE (measured in decibels) and the transmission of the radiant power P behind the shield is calculated as follows:

$$SE/dB = 10 \times \log (P_0/P)$$

where $P_0$ is the radiant power without a shield. Consequently:

$$P/P_0 = 10^{(- SE/10)}$$

List of Reference Symbols

10    First additional layer
20    Polarizer layer
30    Second additional layer
40    Adhesive layer
50    Insulating layer / liquid crystal
60    Polarizer element
70    Conductor layer
80    Third additional layer / covering
90    Further polarizer element
100   Layered structure

**Claims**

1. A layered structure (100), comprising:

    a) at least one polarizer layer (20);
    b) at least one conductor layer (70), comprising an electrically conductive polymer, wherein the electrically conductive polymer is PEDOT/PSS and wherein the conductive polymer in the conductor layer (70) is formed from a dispersion of the electrically conductive polymer, wherein the dispersion comprises as an additional component an additive which increases the conductivity, the additive being selected from the group consisting of compounds containing ether groups, compounds containing lactone groups, compounds containing amide or lactam groups, sulphones, sulphoxides, sugar or sugar derivatives, furan derivatives and di- or polyalcohols;

    wherein the at least one conductor layer (70) has a surface resistance in a range of from $10^{-4}$ to 500 Ω/square.

2. The layered structure (100) according to claim 1, wherein the layered structure (100) comprises at least one additional layer (10, 30, 40, 80) that comprises cellulose ester.

3. The layered structure (100) according to claim 1 or 2, wherein the layered structure (100) comprises at least one further polarizer layer (60).

4. The layered structure (100) according to one of the preceding claims, wherein the layered structure (100) has an electrically insulating layer (50).

5. The layered structure (100) according to one of the preceding claims, wherein at least one of the layers (10, 20, 30, 40, 50, 60, 70, 80) has a thickness in a range of from 0.01 to 10 $\mu$m.

6. The layered structure (100) according to one of the preceding claims, wherein the layered structure (100) is transparent.

7. A process for the production of a layered structure (100), comprising the steps:

   a. provision of a polarizer layer (20);
   b. superimposing a conductor layer (70) over the polarizer layer (20);

   wherein the one conductor layer (70) contains at least one electrically conductive polymer, wherein the electrically conductive polymer is PEDOT/PSS, wherein the conductive polymer in the conductor layer (70) is formed from a dispersion of the electrically conductive polymer, wherein the dispersion comprises as an additional component an additive which increases the conductivity, the additive being selected from the group consisting of compounds containing ether groups, compounds containing lactone groups, compounds containing amide or lactam groups, sulphones, sulphoxides, sugar or sugar derivatives, furan derivatives and di- or polyalcohols, and wherein the at least one conductor layer (70) has a conductivity in a range of from $10^{-4}$ to 500 $\Omega$/square.

8. The process according to claim 7, wherein over the polarizer layer (20) is superimposed at least one additional layer (10, 30, 40, 80) that comprises cellulose ester.

9. The process according to claim 7 or 8, wherein the layered structure (100) comprises at least one further polarizer layer (60).

10. The process according to one of claims 7 to 9, wherein the layered structure (100) has an electrically insulating layer (50).

11. The process according to one of claims 7 to 10, wherein at least one of the layers (10, 20, 30, 40, 50, 60, 70, 80) has a thickness in a range of from 0.01 to 10 $\mu$m.

12. The process according to one of claims 7 to 11, wherein the layered structure (100) is transparent.

13. A display (105) comprising the layered structure (100) according to one of claims 1 to 6.

**Patentansprüche**

1. Ein Schichtaufbau (100), umfassend:

   a) mindestens eine Polarisatorschicht (20);
   b) mindestens eine Leiterschicht (70), umfassend ein elektrisch leitfähiges Polymer, wobei das elektrisch leitfähige Polymer PEDOT/PSS ist und wobei das leitfähige Polymer in der Leiterschicht (70) aus einer Dispersion des elektrisch leitfähigen Polymers gebildet ist, wobei die Dispersion als zusätzliche Komponente ein die Leitfähigkeit erhöhendes Additiv umfasst, wobei das Additiv ausgewählt ist aus der Gruppe bestehend aus Ethergruppen enthaltenden Verbindungen, Lactongruppen enthaltenden Verbindungen, Amid- oder Lactamgruppen enthaltenden Verbindungen, Sulfonen, Sulfoxiden, Zucker oder Zuckerderivaten, Furanderivaten und Di- oder Polyalkoholen;

   wobei die mindestens eine Leiterschicht (70) einen Oberflächenwiderstand in einem Bereich von $10^{-4}$ bis 500

$\Omega$/Quadrat aufweist.

2. Der Schichtaufbau (100) nach Anspruch 1, wobei der Schichtaufbau (100) mindestens eine zusätzliche Schicht (10, 30, 40, 80) umfasst, die Celluloseester umfasst.

3. Der Schichtaufbau (100) nach Anspruch 1 oder 2, wobei der Schichtaufbau (100) mindestens eine weitere Polarisatorschicht (60) umfasst.

4. Der Schichtaufbau (100) nach einem der vorhergehenden Ansprüche, wobei der Schichtaufbau (100) eine elektrisch isolierende Schicht (50) aufweist.

5. Der Schichtaufbau (100) nach einem der vorhergehenden Ansprüche, wobei mindestens eine der Schichten (10, 20, 30, 40, 50, 60, 70, 80) eine Dicke in einem Bereich von 0,01 bis 10 $\mu$m aufweist.

6. Der Schichtaufbau (100) nach einem der vorhergehenden Ansprüche, wobei der Schichtaufbau (100) transparent ist.

7. Ein Verfahren zur Herstellung eines Schichtaufbaus (100), umfassend die Schritte:

   a. Bereitstellung einer Polarisatorschicht (20);
   b. Auflegen einer Leiterschicht (70) auf die Polarisatorschicht (20);

   wobei die eine Leiterschicht (70) mindestens ein elektrisch leitfähiges Polymer enthält, wobei das elektrisch leitfähige Polymer PEDOT/PSS ist, wobei das leitfähige Polymer in der Leiterschicht (70) aus einer Dispersion des elektrisch leitfähigen Polymers gebildet ist, wobei die Dispersion als zusätzliche Komponente ein die Leitfähigkeit erhöhendes Additiv enthält, wobei das Additiv ausgewählt ist aus der Gruppe bestehend aus Ethergruppen enthaltenden Verbindungen, Lactongruppen enthaltenden Verbindungen, Amid- oder Lactamgruppen enthaltenden Verbindungen, Sulfonen, Sulfoxiden, Zucker oder Zuckerderivaten, Furanderivaten und Di- oder Polyalkoholen, und wobei die mindestens eine Leiterschicht (70) eine Leitfähigkeit in einem Bereich von $10^{-4}$ bis 500 $\Omega$/Quadrat aufweist.

8. Das Verfahren nach Anspruch 7, **dadurch gekennzeichnet, dass** über der Polarisatorschicht (20) mindestens eine weitere Schicht (10, 30, 40, 80), die Celluloseester umfasst, überlagert ist.

9. Das Verfahren nach Anspruch 7 oder 8, wobei der Schichtaufbau (100) mindestens eine weitere Polarisatorschicht (60) umfasst.

10. Das Verfahren nach einem der Ansprüche 7 bis 9, wobei der Schichtaufbau (100) eine elektrisch isolierende Schicht (50) aufweist.

11. Das Verfahren nach einem der Ansprüche 7 bis 10, wobei mindestens eine der Schichten (10, 20, 30, 40, 50, 60, 70, 80) eine Dicke in einem Bereich von 0,01 bis 10 $\mu$m aufweist.

12. Das Verfahren nach einem der Ansprüche 7 bis 11, wobei der Schichtaufbau (100) transparent ist.

13. Ein Display (105) beinhaltend den Schichtaufbau (100) nach einem der Ansprüche 1 bis 6.

**Revendications**

1. Une structure stratifée (100), comprenant :

   a) au moins une couche polarisante (20) ;
   b) au moins une couche conductrice (70), comprenant un polymère électriquement conducteur, dans laquelle le polymère électriquement conducteur est PEDOT/PSS et dans laquelle le polymère conducteur dans la couche conductrice (70) est formé à partir d'une dispersion du polymère électriquement conducteur, dans laquelle la dispersion comprend comme composant supplémentaire un additif qui augmente la conductivité, l'additif étant choisi dans le groupe constitué par les composés contenant des groupes éther, les composés contenant des groupes lactone, les composés contenant des groupes amide ou lactame, les sulfones, les sulfoxydes, le sucre ou les dérivés du sucre, les dérivés du furanne et les di- ou polyalcools ;

dans laquelle la couche conductrice (70) au moins présente une résistance de surface comprise entre $10^{-4}$ et 500 $\Omega$/square.

2. La structure stratifiée (100) selon la revendication 1, dans laquelle la structure stratifiée (100) comprend au moins une couche supplémentaire (10, 30, 40, 80) qui comprend un ester de cellulose.

3. La structure stratifiée (100) selon la revendication 1 ou 2, dans laquelle la structure stratifiée (100) comprend au moins une autre couche polarisante (60).

4. La structure stratifiée (100) selon l'une des revendications précédentes, dans laquelle la structure stratifiée (100) comporte une couche électriquement isolante (50).

5. La structure stratifiée (100) selon l'une des revendications précédentes, dans laquelle au moins l'une des couches (10, 20, 30, 40, 50, 60, 70, 80) a une épaisseur dans une gamme de 0,01 à 10 $\mu$m.

6. La structure stratifiée (100) selon l'une des revendications précédentes, dans laquelle la structure stratifiée (100) est transparente.

7. Un procédé de production d'une structure stratifiée (100), comprenant les étapes :

   a. la mise à disposition d'une couche polarisante (20) ;
   b. la superposition d'une couche conductrice (70) sur la couche polarisante (20) ;

   dans laquelle la couche conductrice (70) contient au moins un polymère conducteur de l'électricité, dans laquelle le polymère conducteur de l'électricité est PEDOT/PSS, dans laquelle le polymère conducteur dans la couche conductrice (70) est formé à partir d'une dispersion du polymère conducteur de l'électricité, dans laquelle la dispersion comprend comme composant supplémentaire un additif qui augmente la conductivité, l'additif étant choisi dans le groupe constitué par les composés contenant des groupes éther, les composés contenant des groupes lactone, les composés contenant des groupes amide ou lactame, les sulfones, les sulfoxydes, le sucre ou les dérivés du sucre, les dérivés du furanne et les di- ou polyalcools, et
   dans laquelle la couche conductrice (70) au moins présente une conductivité dans une plage de $10^{-4}$ à 500 $\Omega$/square.

8. Procédé selon la revendication 7, dans lequel on superpose à la couche polarisante (20) au moins une couche supplémentaire (10, 30, 40, 80) qui comprend un ester de cellulose.

9. Le procédé selon la revendication 7 ou 8, dans lequel la structure stratifiée (100) comprend au moins une autre couche polarisante (60).

10. Le procédé selon l'une des revendications 7 à 9, dans lequel la structure stratifiée (100) comporte une couche électriquement isolante (50).

11. Le procédé selon l'une des revendications 7 à 10, dans lequel au moins une des couches (10, 20, 30, 40, 50, 60, 70, 80) a une épaisseur dans une fourchette de 0,01 à 10 $\mu$m.

12. Le processus selon l'une des revendications 7 à 11, dans lequel la structure stratifiée (100) est transparente.

13. Un écran (105) comprenant la structure stratifiée (100) selon l'une des revendications 1 à 6.

Fig. 1

EP 2 820 102 B1

Fig. 2

| 110 |
|-----|

↓

| 120 |
|-----|

↓

PC Ia

| 130 |
|-----|

↓

PC IIa

| 140 |
|-----|

↓

60 {≡

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110310333 A
- US 20070172587 A
- WO 2007105903 A1
- KR 20070093936 A
- KR 20090073062 A
- WO 2009084832 A2